# EUROPEAN PATENT APPLICATION

(11) **EP 4 803 957 A1**
(43) Date of publication of application: **09.09.2026**
(21) Application number: 25161636.3
(22) Date of filing: 04.03.2025
(51) Int. Cl.: G02F 1/295, G02B 6/28, G02B 27/00, G02B 6/12, H04J 14/04

(54) **AN INTEGRATED PHOTONIC CIRCUIT, A CONTROL SYSTEM, A METHOD AND A COMPUTER PROGRAM PRODUCT**

(71) Applicant: Nederlandse Organisatie voor toegepast- natuurwetenschappelijk onderzoek TNO, 2595 DA 's-Gravenhage (NL)
(72) Inventor: COGNÉE, Kévin Georges Guy, 2595 DA 's-Gravenhage (NL); ALTMANN, Robert Karl, 2595 DA 's-Gravenhage (NL)
(74) Representative: V.O.

(57) **Abstract**

The invention relates to an integrated photonic circuit, comprising multimode optical couplers orderly spaced in close proximity to each other forming an optical coherent array such as an optical phased array or an optical coherent receiver array. The integrated photonic circuit further comprises a multiple number of mode converters and multiple sets of single mode optical waveguides. Here, a mode converter is connected to a multimode optical coupler and to a corresponding set of single mode optical waveguides. Further, the mode converter is arranged for converting a multimode signal propagating from the multimode optical coupler into a plurality of single modes each individually propagating into the single mode optical waveguides, or for converting a plurality of single modes individually propagating from the single mode optical waveguides into a multimode signal propagating into the multimode optical coupler.

## Description

The present invention relates to an integrated photonic circuit. Generally, an integrated photonic circuit, also referred to as an integrated optical circuit, is a microchip containing two or more photonic components forming a functioning circuit for detecting, generating, transporting and/or processing light or optical waves. Photonic integrated circuits use photons or particles of light as opposed to electrons that are used by electronic integrated circuits. A major difference between photonic versus electronic integrated circuits is that a photonic integrated circuit provides functions for information signals imposed on optical wavelengths typically in the visible spectrum or near-infrared, e.g. in a 450-1650 nm range.

Integrated photonic circuits are used in the field of optical beamforming and beam steering, and reciprocally, in the field of spatially selective collection and detection of optical signals. Compact optical solutions inspired by existing radar technology have been proposed to generate or receive low-divergence optical beams and scan them without the need for mechanical actuators. These solutions are mostly variations on the concept of optical phased arrays implemented on integrated photonic circuits. They consist of an array of optical couplers that are used conjointly to synthesize a receiver of larger aperture, and therefore capable of emitting beam with reduced divergence under the principle of diffraction, and reciprocally be highly sensitive but selective to certain directions of incoming light.

In such a device, the optical phases between the many optical couplers of the array need to be aligned to enable a desired beamforming profile when operating as an emitter, but also to only be sensitive to the desired light when operating as a receiver. In emission mode, a beam is formed in the direction where the waves emitted interfere constructively. The phase of the light emitted by each emitter can be controlled by phase modulators, and thereby control the direction of the beam. The reverse principle can be used in reception, but a passive way can also be exploited in this case where the phase of the light received by each receiver is recorded and analyzed numerically to identify the direction from which the light is impinging the array.

A proper and dynamic adjustment of the optical phases enables the optical phased array to dynamically steer the optical beam emitted or conversely choose the direction in which one wants to detect optical signals.

However, due to the discrete and periodic nature of the optical phased arrays and the finite size of the optical coupler elements, the optical beams emitted by optical phased arrays exhibit a certain degree of undesired diffraction peaks. These peaks, also called diffraction orders, arise in other directions where the waves emitted by the emitters, or received by the receivers interfere constructively. A diffraction order identified by the signed integer M corresponds to the direction where the wavefront N of an emitter interferes constructively with the wavefront N+M emitted by the next emitter in the array. Diffraction orders constitute an inefficiency in emission since part of the light is sent in other directions than the main peak of the beam. They can even constitute a safety hazard in some high-power applications or a security concern in the context of optical communication if intercepted. In reception operation mode, these diffraction orders manifest themselves as aliasing, or ghost images, whereby signals are received from undesired directions and wrongly identified by the receiver as valid.

In order to remove diffraction orders, the most intuitive approach is to bring the optical elements closer than the wavelength of the light they operate at. However, when it can be implemented, this approach leads to undesired effects due to the optical elements influencing each other because of the near-field optical coupling and complicated techniques need to be employed to remove these undesired effects.

In another common approach, the optical elements are placed randomly or pseudo-randomly. For (pseudo-)randomly placed elements, the absence of periodicity in the arrangement of the elements means the constructive interference condition can strictly be met in only one direction of design. Although the other diffraction orders are suppressed, the energy they contain is redistributed as a weak diffuse pattern in the whole field of view rather than being redirected to the main target beam and therefore it does not improve the energy efficiency of the optical phased array.

Another way to deal with these diffraction orders is to physically block them with objects placed in the direction of the undesired beam. This is common practice in the more general context of eliminating stray light. This implementation is however not ideal for strong diffraction orders since light remains lost and is not used for the main beam, most likely at least partially scattered in the device which can be detrimental for the signal collected by other detectors. Furthermore, the main beam is unavoidably impacted as well, at least by restricting the field of view available to it.

It is an object of the invention to provide an improved integrated photonic circuit wherein undesired diffraction orders are reduced, in an emitter mode and/or in a receiver operation mode. It is in particular an object to provide an integrated photonic circuit for application in the field of optical beamforming and beam steering, as well as for spatially selective collection and detection of optical signals, wherein undesired diffraction orders are reduced.

Thereto, according to an aspect of the invention, an integrated photonic circuit is provided, comprising a multiple number of multimode optical couplers orderly spaced in close proximity to each other forming an optical coherent array, such as optical phased array, also referred to as a multimode optical phased array, or an optical coherent receiver array, also referred to as a multimode optical coherent receiver array, a multiple number of mode converters and multiple sets of single mode optical waveguides, wherein each mode converter is connected to a corresponding multimode optical coupler and to a corresponding set of single mode optical waveguides, and wherein each mode converter is arranged for converting a multimode signal propagating from the respective multimode optical coupler into a plurality of single modes each individually propagating into the respective single mode optical waveguides, or for converting a plurality of single modes individually propagating from the respective single mode optical waveguides into a multimode signal propagating into the respective multimode optical coupler.

By using multimode optical couplers, generally, complex optical beams can be generated or, reciprocally, recorded. Then, diffraction orders of respective modes may be controlled to mainly cancel each other interferometrically. On the other hand, the main diffraction orders of the respective modes may constructively contribute to each other. As an example, an optical coupler may be used to enable optical propagation of a zero order optical mode and a first order optical mode in free space. In this case, a first diffraction peak (-1 or +1) of the zero order mode and a first diffraction peak (-1 or +1) of the first order mode may mainly or completely cancel each other. Then, the first diffraction peak (-1 or +1) of the combination of zero and first order modes may be reduced or even removed due to destructive interference.. Generally, when conservation of energy applies, if destructive interference happen in one part of the beam, constructive interference must happen in another part of the beam to redistribute the energy. In the present case the zero order peak of the zero order optical mode and the zero order peak of the first order optical mode may interfere constructively. Then, the zero order peak of the combination of zero and first order modes may contain more energy than the sum of the energy of the zero order peaks of the zero and first order optical modes.

By controllably cancelling diffraction peaks interferometrically, emission and reception becomes more efficient reinstituting the corresponding optical energy in the main target beam. Further, in emission context, a safety hazard in high-power applications may be avoided. In addition, a chance of interception in the context of optical communication may be reduced improving security. Similarly, in a reception context, the occurrence of aliasing or ghost images may be counteracted.

In operation, single mode signals individually propagating through single mode waveguides are transmitted to or received from the respective multimode optical couplers via the corresponding mode converters. Here, the mode converters are arranged either to convert single mode signals propagating from single mode waveguides into a multimode signal for propagation into the corresponding multimode optical coupler, or to convert a multimode signal propagating from a multimode optical coupler into a plurality of single modes each individually propagating into the respective single mode optical waveguides.

In practice, a set of single mode optical waveguides associated with a particular multimode optical coupler may include, for example, two, three or four multimode optical waveguides.

The process of cancelling a diffraction order in an interferometric manner is performed by controlling at least a phase, and optionally an amplitude of individual modes transmitted to or received from the multimode optical couplers.

The optical coupler can e.g. be implemented as an optical antenna, a grating coupler or an edge coupler that is arranged, in an orderly spaced manner with the other optical couplers, such as an array. Generally, an optical antenna converts energy of free-space propagation optical waves into localized optical waves, and vice versa. Also, a free-space coupler is designed to couple free-space beams into an optical waveguiding structure such as an optical fiber or optical waveguides of an integrated photonic circuit. A grating coupler generally includes an optical waveguide provided with a periodic grating structure coupling optical energy between respective structures. Further, an edge coupler typically is provided with a tapered waveguide for coupling optical waves between an optical fiber and photonic waveguides.

A mode converter can be integrated with a corresponding multimode optical coupler, e.g. directly integrated into it, forming an integral component of the integrated photonic circuit. Otherwise, the mode converter and the multimode optical coupler can be formed separately. The single mode optical waveguides are preferably integrated on the integrated photonic circuit, or, alternatively, provided as separate components mounted on the integrated photonic circuit. Further, a multimode optical coupler may include a multimode optical waveguide enabling multiple modes extending in a transverse direction, to propagate, in a plane of the photonic circuit.

In an embodiment, the integrated photonic circuit comprises detectors, also referred to as wavefront sensors, for detecting light in the respective single mode optical waveguides, to operate in reception mode. A wavefront sensor may include a photodetector for measuring an amplitude of an optical signal, as well as an interferometer for measuring a phase of an optical signal.

In another embodiment, the integrated photonic circuit comprises emitting components for emitting light in the respective single mode optical waveguides, to operate in an emission mode.

In yet a further embodiment, the integrated photonic circuit comprises both detectors for detecting light in the respective single mode optical waveguides, and emitting components for emitting light in the respective single mode optical waveguides, such that the optical phased array can be used both in a reception mode or emission mode. Additional components may be used to avoid undesired mixing of the emitted and received optical signal inside the integrate photonic circuit, such as isolators and circulators.

Advantageously, the detectors and/or emitting components, as well additional components are realized on the integrated photonic circuit, or, alternatively, provided as separate components.

Further, the integrated photonic circuit may include a cascaded sequence of optical components connected to the single mode optical waveguides, for generating a directional optical beam, using the optical phased array, or for receiving an optical phased array response. As an example, the cascaded sequence of optical components can be implemented as a tree structure of optical components. Alternatively, another topology of circuit performing a similar task can be used.

Generally, each multimode optical coupler can be implemented as a single coupler enabling multiple modes extending in a transverse direction, to propagate, in a plane of design that may be the plane of the photonic circuit and may be any other plane.

In addition, the invention relates to a control system for controlling an integrated photonic circuit. The control system comprises a processing unit arranged for operating the optical coherent array. In particular, the processing unit may be arranged to control at least a phase, and optionally an amplitude of individual modes transmitted to or received from the multimode optical couplers.

Generally, the processing unit is arranged for modulating respective phases of respective optical modes propagating in the respective single mode optical waveguides, for operating the optical phased array in either a reception or emission mode, or a sensing or reception mode. Here, the processing unit may include a step for modulating the respective phases to achieve destructive interference for unwanted diffraction peaks. The processing unit may apply an algorithm to control other optoelectronic components to reach a desired optical output of the optical phase array.

In another embodiment, the processing unit is arranged for reading phase and amplitude of respective optical modes propagating in the respective single mode optical waveguides, for operating the optical coherent array in a reception mode. Then, the optical phased array is arranged as a receiver only. Again, the processing unit may apply an algorithm, as a post-process analysis, to analyze correlations between the respective optical signals collected by the optical phased array and to extract relevant information.

It is noted that, within the document, an optical phased array is to be understood as an array of optical couplers that is used for transmitting optical beams in a phased controlled manner, or for receiving optical beams in either a phased controller manner. In an approach wherein phases and amplitude of individual optical beams are recorded or measured for post-process analysis, the array of optical couplers form an optical coherent receiver array. In the latter case, the optical coherent receiver array is not operationally phase controlled or amplitude controlled, however phase and amplitude information of individual beams is used in the subsequent digital process, to analyze correlations and to extract relevant beam information. Then, the architecture of the optical coherent receiver array implementation could also be referred to as a virtual phased array. The invention also relates to a method of controlling an integrated photonic circuit.

Further, the invention relates to a computer program product for controlling an integrated photonic circuit. A computer program product may comprise a set of computer executable instructions stored on a data carrier, such as but not limited to a flash memory, a CD or a DVD. The set of computer executable instructions, which allow a programmable computer to carry out the method as defined above, may also be available for downloading from a remote server, for example via the Internet, e.g. as an app.

The computer program product comprises computer readable code for causing a processing unit to perform the step of operating the optical phased array.

Other advantageous embodiments according to the invention are described in the following claims.

The invention will be further elucidated on the basis of exemplary embodiments which are represented in the drawings. The exemplary embodiments are given by way of non-limitative illustration of the invention. In the drawings:
Fig. 1 shows a schematic view of an integrated photonic circuit according to the invention for operation in an emitter mode or a receiver mode;
Fig. 2 shows a schematic view of an integrated photonic circuit according to the invention for operation in a receiver mode;
Fig. 3 shows a far-field distribution of a zero order optical mode and a first order optical mode, respectively, of an individual coupler of the integrated photonic circuit shown in Fig. 1;
Fig. 4 shows a field representation of zero order optical mode and first order optical mode interferometry for an array of emitters;
Fig. 5 illustrates the approximate transverse field distribution in a closed multimode optical coupler;
Fig. 6 shows far-field distributions corresponding to the transverse field distribution approximations in the closed multimode optical coupler shown in Fig. 4, as a function of field of view;
Figs. 7a-b show far-field distributions and corresponding envelop functions with single mode excitation;
Figs 8a-b show far-field distributions and corresponding envelop functions with multimode excitation, and
Fig. 9 shows a flow chart of a method according to the invention.

In the figures identical or corresponding parts are represented with the same reference numerals. The drawings are only schematic representations of embodiments of the invention, which are given by manner of non-limited examples.

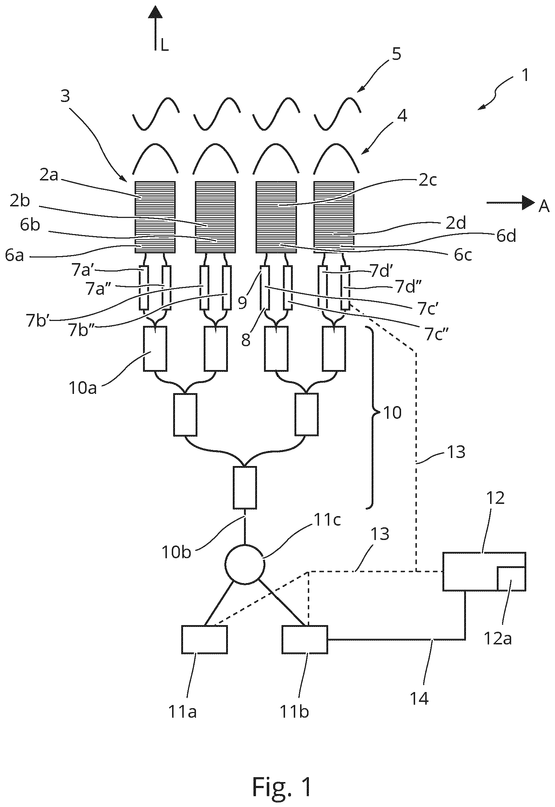

Figure 1 shows a schematic view of an integrated photonic circuit 1 according to the invention for operation in an emitter mode or a receiver mode. The integrated photonic circuit 1 comprises a multiple number of multimode optical couplers 2a-d orderly spaced in close proximity to each other forming an optical phased array 3 extending in an array direction A of design that may be mainly transverse to a length axis L of an individual multimode optical coupler 2a. In the embodiment shown in Fig. 1, the multimode optical couplers 1a-d form an optical coherent array implemented as an optical phased array 3. In the shown embodiment, each multimode optical coupler 2a-d is arranged for emission or reception of a zero order mode optical field 4 and a first order mode optical field 5. In shown embodiment, each multimode optical coupler also includes an optical mode converter to directly associate each mode of the multimode optical coupler to a corresponding single mode waveguide.

The integrated photonic circuit 1 further comprises a multiple number of mode converters 6a-d and multiple sets of single mode optical waveguides 7. Typically, the number of mode converter 6a-d is the same as the number of multimode optical couplers 1a-d. Similarly, also the number of sets of single mode optical waveguides 7 is the same as the number of multimode optical couplers 2a-d. Here, each mode converter 6a-d is connected to a corresponding multimode optical coupler 2a-d and to a corresponding set of single mode optical waveguides 7. As shown in Fig. 1, a first mode converter 6a is connected to a first multimode optical coupler 2a and to a first set of single mode optical waveguides 7a, and so on. The single mode optical waveguides 7a-d each have a proximal end 8 and a distal end 9.

In the shown embodiment, the mode converter 6a-d is integrated with a corresponding multimode optical coupler 2a-d forming an integral component of the integrated photonic circuit 1.

Further, in the shown embodiment, each set of single mode optical waveguides 7a-d includes two single mode optical waveguides that are connected, at their distal end 9, to a corresponding mode converter 6a-d. Here, a first set of single mode optical waveguides 7a includes a first and a second single mode optical waveguide 7a', 7a". Similarly, a second set 7b includes a first and a second single mode optical waveguide 7b', 7b", a third set 7c includes a first and a second single mode optical waveguide 7c', 7c", and a fourth set 7d also includes a first and a second single mode optical waveguide 7d', 7d".

Multiple parallel strings or chains are formed each one including a multimode optical coupler 2a-d connected to a corresponding mode converter 6a-d that is also connected to a corresponding set of single mode waveguides 7a-d. Here, each mode converter 6a-d is arranged for converting a multimode signal propagating from the respective multimode optical coupler 2a-d into a plurality of single modes each individually propagating into the respective single mode optical waveguides 7a-d, or for converting a plurality of optical modes individually propagating from the respective single mode optical waveguides 7a-d into a multimode signal propagating into the respective multimode optical coupler 2a-d.

The multimode optical couplers 2a-d have been implemented as grating couplers. Alternatively, the couplers can be formed as optical antenna or edge couplers, for example. Further, the multimode optical couplers 2a-d include or are formed as multimode optical waveguides facilitating multimode optical signals to propagate from the mode converters 6a-d through the couplers 2a-d.

The integrated photonic circuit 1 further has a tree structure 10 of optical components 10a connected to proximal ends 8 of the single mode optical waveguides 7a-d. In the shown embodiment, the optical components, also referred to as optoelectronic components 10a, include optical splitters.

The tree structure 10 forms a cascaded sequence of optical components 10a connected to the single mode optical waveguides 7, for generating a directional optical beam, using the optical phased array, or for receiving an optical phased array response, as described below in more detail.

Further, the circuit 1 includes a light emitting component such as a laser 11a and a detector 11b connected to the tree structure 10 via an optical circulator 11c. Also, a control system 12 is provided comprising a processing unit 12a arranged for operating the optical phased array 3.

When operating in an emitter mode, the integrated photonic circuit 1 is arranged to operate the laser 11a for emitting light in the respective single mode optical waveguides 7a-d, addressed individually via the tree structure 10. When operating in a receiving mode, the circuit 1 is arranged to operate the detector 11b for receiving light in the respective single mode optical waveguides 7a-d, recombined coherently via the tree structure 10.

The control system 12 is associated with the integrated photonic circuit 1 via a command line 13 and a data line 14. In operation, the control unit 12 operates the optical phased array 3 by sending command signals via the command line 13 to the laser 11a or to the detector 11b emitting or receiving light, respectively. Also, the phases of the phase modulators or single mode optical waveguides 7 are controlled by the control system 12, via the command line 13, in order to obtain a coherent recombination of signals, and for selecting a direction of emission and/or reception. The data line 14 interconnecting the control system 12 to the laser 11a and the detector 11b is arranged for transmitting any data from the laser 11a and the detector 11b to the control system 12, e.g. status information of the laser 11a and the detector 11b, and/or sensor data from the detector 11b.

The processing unit 12a is arranged for modulating respective phases of respective optical modes propagating in the respective single mode optical waveguides 7a-d, for operating the optical phased array 3 in the emitting mode or the receiving mode, respectively. Here, a process of modulating respective phases and, optionally, amplitudes may include a step of setting a phase difference for destructive interference of unwanted diffraction orders , as described in more detail below. In the shown embodiment, the single mode optical waveguides 7a-d can be controlled to modulated the optical signal in phase and/or amplitude, via the command line 13. The processing unit 12a generally applies an algorithm to control the phase and amplitude in the single mode optical waveguides 7a-d provided with modulators, to obtain a desired optical output or a desired optical input of the optical phased array 3, in the emitting mode or the receiving mode, respectively. Alternatively, phase and/or amplitude of optical signals are set via active optoelectronic components 10a of the tree structure 10 controlled by the processing unit 12a, via the command line 13. Then, the single mode optical waveguides 7a-d may be implemented as passive components.

As described above, the circuit 1 may operate in the emission mode using the laser 11a. Further, the circuit 1 may operate in the reception mode using the detector 11b. In the shown implementation, the circulator 11c is connected to the bottom 10b of the tree structure 10, and to the laser 11a and the detector 11b, rendering the structure suitable for selectively operating in emission mode or reception mode. In another implementation, the laser 11a or the detector 11b is connected directly to the bottom 10b of the tree structure 10, rendering the circuit 1 suitable for operation in the emission mode only, or in the reception mode only, respectively. The laser 11a may also be connected optically to the detector 11b to perform interferometric measurements of a phase and/or an amplitude of the optical signal received by detector 11b.

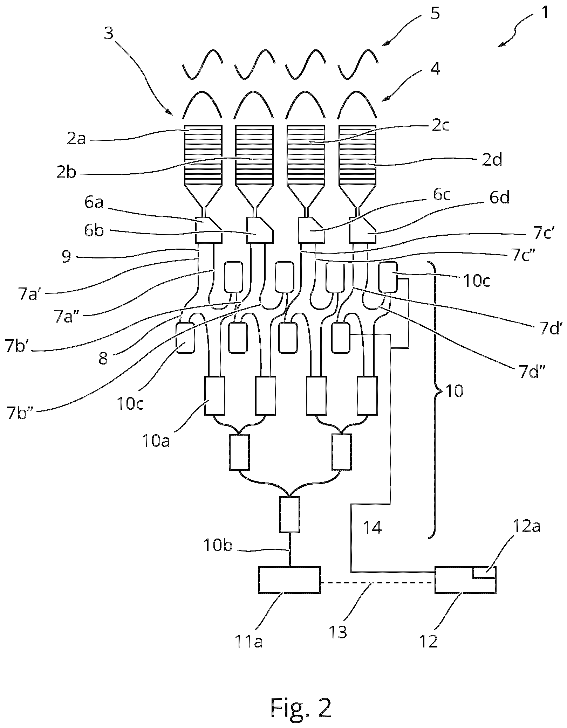

Figure 2 shows a schematic view of an integrated photonic circuit 1 according to the invention for operation in a receiver mode only, via a passive, or non-active phase control mode. The circuit 1 generally has a similar structure as the circuit 1 shown in Fig. 1, comprising multimode optical couplers 2a-d orderly spaced in close proximity to each other forming an optical coherent array 3, corresponding mode converters 6a-d and corresponding sets of single mode optical waveguides 7, forming parallel strings or chains.

However, the embodiment shown in Fig. 2 includes another tree structure 10 having passive optical components 10a, e.g. implemented as optical beam splitters as well as additional optical components 10c generating reference beams and being connected to proximal ends 8 of the single mode optical waveguides 7. The additional optical components 10c may be implemented as wavefront sensors e.g. including interferometers and light detectors for measuring both a phase and an amplitude of the received light. The additional optical components 10c are connected to a corresponding splitter 10a, similar to the structure described referring to the embodiment shown in Fig. 1 for receiving a reference signal generated by a laser 11a connected to the bottom 10b of the tree structure 10. Then, the arrays of wavefront sensors 10c actually replace the phase and/or amplitude modulator structure of the embodiment shown in Fig. 1, thus occupying less space and requiring less complicated electronics, for measuring both phase and amplitude of the individual signals received via the single mode optical waveguides 7.

As described above, the integrated photonic circuit 1 shown in Fig. 2 includes an emitter component or laser 11a for controlling light travelling to the respective wavefront sensors 10c, via the tree structure 10, for interference with the light received via the single mode optical waveguides 7, for detecting both amplitude and phase thereof.

Again, Figure 2 shows a control system 12 comprising a processing unit 12a arranged for operating the optical phased array 3. It is noted that, in a strict sense, the optical array 3 shown in Fig. 2 is not an optical phased array as, in principle, signal phases are not controlled but measured only. Then, the optical array in Fig. 2 is an optical coherent array implemented as an optical coherent receiver array.

In the shown embodiment, the control system 12 is associated with the integrated photonic circuit 1 via a command line 13 and a data line 14 interconnecting the control system 12 with the laser 11a and the wavefront sensors 10c, respectively. In operation, the processing unit 12a may operate the optical coherent receiver array 3 by sending command signals via the command line 13 to the laser 11a to control a property such as phase, amplitude or frequency of the generated common reference beam that is transmitted into the tree structure 10, e.g. for improving interferometric measurements. The data line 14 interconnecting the control system 12 with the wavefront sensors 10c is arranged for receiving data from said wavefront sensors 10c to the control system 12, e.g. phase and/or amplitude information of the received optical signals, providing a data set that may be subjected to algorithms to analyze correlations between all the optical signals collected, and to extract relevant information, as a post processing task to be performed digitally.

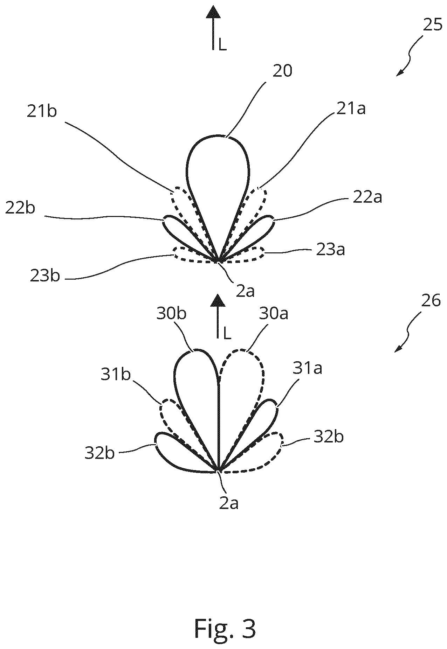

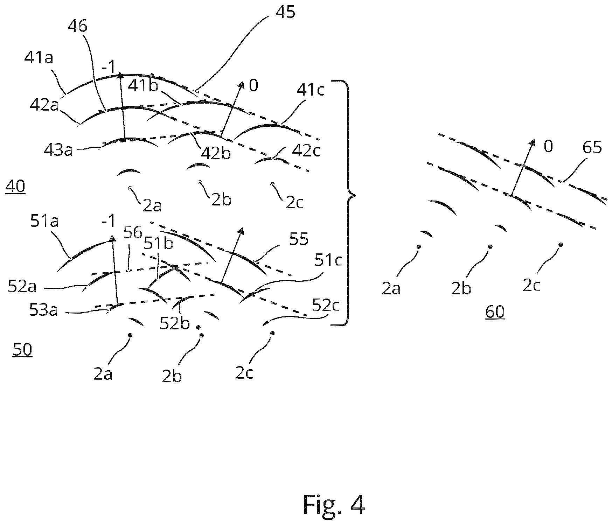

Figure 3 shows a far-field distribution of a zero order optical mode and a first order optical mode, respectively, of an individual coupler 2a of the integrated photonic circuit 1 shown in Fig. 1. In particular, at the top of Fig. 3, the zero order optical mode pattern of a far-field distribution or envelop 25 of the zero order mode optical field 4 is shown including a main lobe 20, a secondary lobe 21a at the right, a secondary lobe 21b at the left, a tertiary lobe 22a at the right, a tertiary lobe 22b at the left, a quaternary lobe 23a at the right, and a quaternary lobe 23b at the left. Similarly, at the bottom of Fig. 3, the first order mode pattern of a far-field distribution or envelop 26 of the first order mode optical field 5 is shown including a main lobe 30a at the right, a main lobe 30b at the left, a secondary lobe 31a at the right, a secondary lobe 31b at the left, a tertiary lobe 32a at the right and a tertiary lobe 32b at the left. In Fig 3. an example is presented where the coupler structure has mirror symmetries, and these symmetries are passed on to the field distribution of the modes of the coupler 2. In particular, even-numbered modes such as the zero order mode are symmetric; if a lobe is positive on the left, its mirror image on the right is also positive, and if a lobe is negative on the left, its mirror image on the right is also negative, while the odd-numbered modes such as the first order mode are anti-symmetric; if a lobe is positive on the left, its mirror image on the right is then negative and if a lobe is negative on the left, its mirror image on the right is then positive. However if the coupler does not present any symmetries, the field distribution of the different modes may also not present symmetries. Figure 4 shows a representation of the phase front propagation of zero order optical mode and first order optical mode and the resulting interferometry. On the left hand side, the diffraction field distribution 40 of a zero order optical mode of couplers 2a-c is shown, on the top, generated or received by three optical couplers 2a-c by interference. Consecutive individual first, second and third wavefronts 41a, 42a, 43a of the zero order optical mode field generated by a first, optical coupler 2a are shown. Similarly, consecutive individual first and second wavefronts 41b, 42b generated by a second optical coupler 2b, next to the first optical coupler 2a are shown. Also, consecutive individual first and second wavefronts 41c, 42c generated by a third optical coupler 2c, next to the second optical coupler 2b are shown. Here, the first wavefronts 41a, 41b and 41c interfere constructively generating a zero order diffraction peak 45. Similarly, the second wavefronts 42a, 42b and 42c interfere constructively contributing to the same zero order diffraction peak 45 one period later in time. Further, the third wavefront 43a of the first optical coupler 2a, the second wavefront 42b of the second optical coupler 2b and the first wavefront 41c of the third optical coupler 2c interfere constructively generating a first order (-1) diffraction peak 46. The resulting zero order mode diffraction field distribution 40 caused by constructive interference includes a zero order diffraction peak 45 and a first order (-1) diffraction peak 46. Because the zero order optical mode of couplers 2a-c is symmetric, the left half of emission is in phase with the right part, and therefore the zero order peak 45 is in phase with the first order peak 46.

Similarly, on the left hand bottom side of Fig. 4, a diffraction field distribution 50 of the first order optical mode of couplers 2a-c is shown, at the bottom, generated or received by the three optical couplers 2a-c. Again, first wavefronts 51a, 51b and 51c of the three optical couplers 2a-c interfere constructively generating a zero order diffraction peak 55, while also second wavefronts 52a, 52b and 52c of the three optical couplers 2a-c interfere constructively contributing to the same zero order diffraction peak 55 one period later in time. Further, the third wavefront 53a of the first optical coupler 2a, the second wavefront 52b of the second optical coupler 2b and the first wavefront 51c of the third optical coupler 2c interfere constructively generating a first order diffraction peak 56. The resulting first order mode diffraction field distribution 50 caused by constructive interference includes a zero diffraction order peak 55 and a first order (-1) diffraction peak 56. Because the first order mode is anti-symmetric, the left and right part of the emission are in phase opposition, and therefore the first order (-1) diffraction peak 56 is also in phase opposition to the zero order peak 55.

A superposition of both the diffraction field distribution 40 of the zero order optical mode of coupler 2a-c and the diffraction field distribution 50 of the first order optical mode of coupler 2a-c forms a superposed field 60, by interference. Here, the main peak 45 of the zero order optical mode field 40 on the one side, and the main peak 55 of the first order optical mode field 50 interfere constructively, forming a main peak 65 in the superimposed field 60. However, the first order (-1) diffraction peaks 46, 56 of the zero and first order optical mode fields 40, 50, respectively, interfere destructively, such that they mainly cease. This is because the zero order peak 45 and the first order peak 46 of the zero mode order field 40 are in phase, while the zero order peak 55 and the first order peak 56 of the first mode order field 50 are in phase opposition. Then, by setting a phase and amplitude difference between the zero order optical mode field 40 and the first order optical mode field 50 such that the first diffraction order peaks 46, 56 are in phase opposition for cancelling each other out, the main peaks 45, 55 interfere constructively, i.e. they sum up, become stronger by redistributing the energy of the first order (-1) diffraction peaks 46, 56 to the main diffraction order peaks 45, 55.

By combining the zero order optical mode field distribution 40 and the first order optical mode field distribution 50, the first order diffraction peaks 46, 56 can at least partly be suppressed, while the main peaks 45, 55 enhance each other, restituting the corresponding optical energy in a main diffraction peak 65.

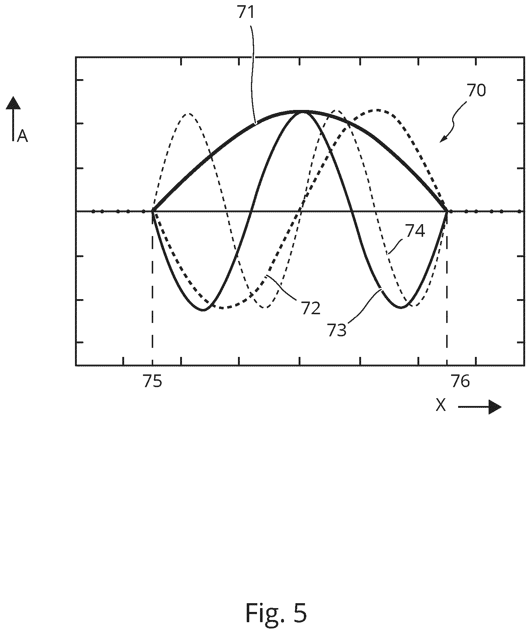

Figure 5 illustrates the transverse field distribution approximations in a multimode optical coupler assuming perfectly reflecting boundaries, and polarization is not considered. These are coarse approximations for illustration of aspects of the invention. In the approximations, a one dimensional optical multimode coupler is simulated. Here, a mode profile of couplers is assumed to be of the sine and cosine form with vanishing field boundaries at the edge of each coupler, such that no evanescent fields between the couplers are accounted for.

In Fig. 5 an approximation of the amplitude A of near field modes 70 as a function of x is shown, where the field is zero at first and second boundaries 75, 76. The near field modes includes a zero order mode 71, a first order mode 72, a second order mode 73 and a third order mode 74, i.e. four modes contrary to the embodiments shown in Figs. 1-4 wherein two modes occur, i.e. a zero order mode 25 and a first order mode 26.

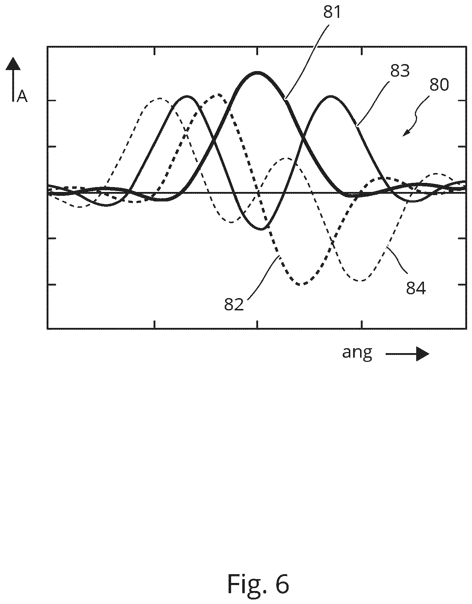

Figure 6 shows far-field transverse distributions corresponding to the transverse near-field field distribution approximations in 71-74 shown in Fig. 5, as a function of field of view ang. Here, far-field distributions 80 have been evaluated and simulated as a function of field of view ang. Fig. 6 shows the amplitude A of the far-field distributions 80, in particular a zero order optical mode far-field counterpart 81 of the zero order optical mode near-field 71, a first order optical mode far-field counterpart 82 of the first order optical mode near-field 72, a second order optical mode far-field counterpart 83 of the second order optical mode near-field 73, and a third order optical mode far-field counterpart 84 of the third order optical mode near-field 74, as a function of field of view ang. It appears from Fig. 6, that using more modes generally increases an accessible field of view.

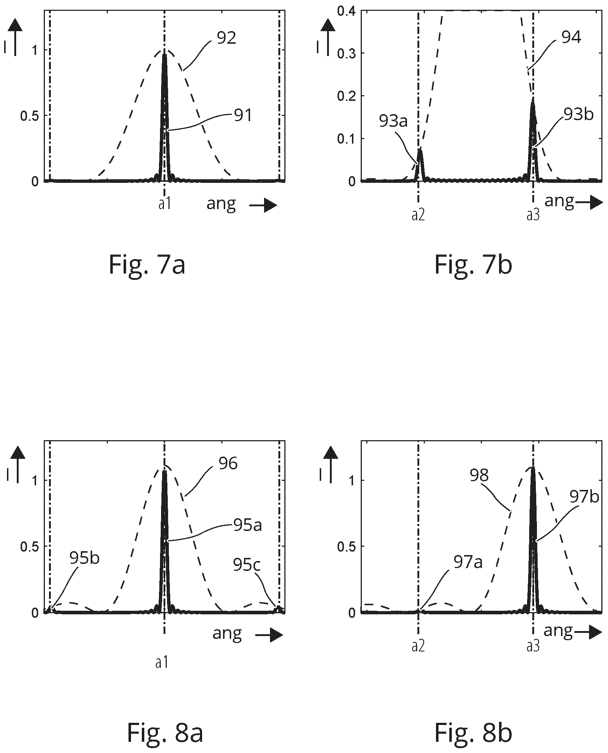

Figs. 7a-b show far-field distributions and corresponding envelop functions with single mode excitation. An intensity I is shown as a function of the field of view ang. The intensity I is the square modulus of the amplitude A and is therefore strictly a positive or null number. The viewing angle is measured in the plane defined by all the beams that can be emitted/received by the optical coherent array, and with respect to a central direction of design, that may be the direction normal but may also be any other direction. Generally, a far-field produced by an array of optical couplers is the product of a diffraction order pattern of a coupler array on the one hand and a far-field envelope corresponding to the emission pattern of each individual coupler on the other hand.

In Fig. 7a, the viewing angle or targeted direction is zero. Then, the resulting far-field of a zero order mode excitation 91 is narrow-banded and directed to a field of view angle a1 being zero. In other words, the resulting far-field is focused at the viewing angle. Here, side diffraction peaks are outside the scope of the corresponding far-field envelope 92, also shown, but this is not generally the case.

In Fig. 7b, the viewing angle or targeted direction deviates from zero, i.e. a main peak of the generated or received field is travelling at an angle deviating from the central direction of design for the emission or reception of the optical coherent array. Here, the resulting far-field of a zero order optical single mode excitation 93 has a left peak 93a at field of view a2, i.e. a first order (-1) diffraction peak, and a right peak 93b at targeted field of view a3, i.e. a zero diffraction order peak. In other words, the resulting far-field has not only a focus at the viewing angle a3 but includes a first order diffraction peak 93a. Also the corresponding far-field envelope 94 is shown. Since a single mode is used, the envelope 94 is identical to 92. However, because the peak 93b is in a weaker part of the envelop 94-92 than peak 91, the 93b is much weaker than the peak 91. Therefore the envelope 92 and 94 are scaled differently in the figure for improving visibility.

Figs 8a-b show far-field distributions and corresponding envelop functions with multimode excitation. Here, a number of multimode fields have been added showing the effect of reduced diffraction order side peaks. In the shown example, first order, second order and third order optical modes have been superposed to the zero order optical mode fields shown in Figs. 7a-b.

In Fig. 8a, the viewing angle is zero. Then, the resulting far-field of a multimode excitation 95 has a central peak 95a directed to a field of view angle a1 being zero, and relatively small first diffraction order peaks 95b, 95c. In other words, the resulting far-field is still focused at the viewing angle. Also the corresponding far-field envelope 96 is shown. The envelope 96 is also resulting from the superposition of the envelopes of zero, first, second and third order optical modes, and therefore has a different profile than envelope 92 of Fig. 7a since envelope 92 is the envelope of single optical mode, the zero order optical mode.

In Fig. 8b, the viewing angle deviates from zero, i.e. a main peak beam of the generated or received field is travelling at an angle deviating from an orientation of the optical couplers 2, i.e. deviating from the central direction of design for the emission or reception of the optical coherent array. Here, the resulting far-field of a multimode excitation 97 has a left peak 97a at field of view a2, i.e. a first order (-1) diffraction peak, and a right peak 97b at targeted field of view a3, i.e. a zero order diffraction peak. In other words, the resulting far-field has not only a focus at the viewing angle a3 but includes a small first order diffraction peak 97a. Also the corresponding far-field envelope 98 is shown. Since multiple modes are used, the envelope 98 can be controlled to optimize the power in the main peak 97b and cancel the diffraction order 97a. This is visible by the fact that envelope 98 is different in shape compared to the envelope 94 shown in Fig. 7b illustrating the single mode case.

The mechanism by which the field of view increases by adding modes is actually that the narrow envelope follows the targeted direction. This therefore also means that diffraction orders outside of the targeted direction are reduced, if not completely removed. Generally, the beam follows a targeted view better than in the zero order mode case, i.e. with more energy, while adjacent diffraction peaks are suppressed. In the normal direction, diffraction orders are further reduced, but the main interest of using multimode arrays appear for higher angle where it is seen that the aliasing free field of view is largely extended using additional modes. As an example, with four modes there is still a large diffraction peak for an angle twice the Brillouin zone, but the single mode array sends as much as 30% of the energy in different diffraction order than the one of interest.

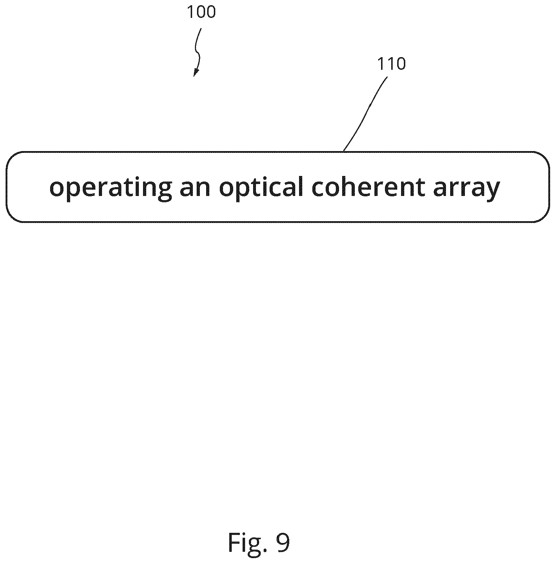

Figure 9 shows a flow chart of a method 100 according to the invention. The method 100 is used for controlling an integrated photonic circuit. The method 100 comprises a step of operating 110 the optical coherent array.

The method 100 for controlling an integrated photonic circuit can also at least partially be performed using a computer program product comprising instructions for causing a processing unit to perform at least one step of the method according to the invention, e.g. at least the step of operating 110 the optical coherent array. All (sub)steps can in principle be performed on a single processor. However, it is noted that at least one (sub)step can be performed on a separate processor. A processor can be loaded with a specific software module.

Dedicated software modules can be provided, e.g. from the Internet.

Various variations are possible. It will be clear to the skilled person that the invention is not limited to the exemplary embodiment represented here. Many variations are possible.

It is noted that, in practice, advantageously, a step of calibrating the optical coherent array may be performed prior to operating the optical coherent array.

Such variants will be apparent for the person skilled in the art and are considered to fall within the scope of the invention as defined in the following claims.

## Claims

1. An integrated photonic circuit, comprising:
- a multiple number of multimode optical couplers orderly spaced in close proximity to each other forming an optical coherent array, such as an optical phased array or an optical coherent receiver array;
- a multiple number of mode converters and multiple sets of single mode optical waveguides, wherein each mode converter is connected to a corresponding multimode optical coupler and to a corresponding set of single mode optical waveguides, and wherein each mode converter is arranged for converting a multimode signal propagating from the respective multimode optical coupler into a plurality of single modes each individually propagating into the respective single mode optical waveguides, or for converting a plurality of single modes individually propagating from the respective single mode optical waveguides into a multimode signal propagating into the respective multimode optical coupler.

2. An integrated photonic circuit according to claim 1, wherein the optical coupler is an optical antenna, a grating coupler or an edge coupler.

3. An integrated photonic circuit according to claim 1 or 2, wherein a mode converter is integrated with a corresponding multimode optical coupler forming an integral component of the integrated photonic circuit.

4. An integrated photonic circuit according to any of the preceding claims, wherein a multimode optical coupler includes a multimode optical waveguide.

5. An integrated photonic circuit according to any of the preceding claims, comprising detectors for detecting light in the respective single mode optical waveguides and/or light emitting components for emitting light in the respective single mode optical waveguides.

6. An integrated photonic circuit according to any of the preceding claims, comprising a cascaded sequence of optical components connected to the single mode optical waveguides.

7. An integrated photonic circuit according to claim 6, wherein the cascaded sequence of optical components includes a control tree structure provided with optical splitters, the circuit further in particular comprising a light emitting component and a detector connected to the tree structure via an optical circulator.

8. An integrated photonic circuit according to claim 6, wherein the cascaded sequent of optical components includes a tree structure provided with optical splitters as well as wavefront sensors interconnected between the single mode optical waveguides and corresponding optical splitters, respectively, the circuit further in particular comprising a light emitting component connected to the tree structure for generating a reference signal.

9. A control system for controlling an integrated photonic circuit according to any of the preceding claims 1-8, comprising a processing unit arranged for operating the optical coherent array.

10. A control system according to claim 9, wherein the processing unit is arranged for modulating respective phases of respective optical modes propagating in the respective single mode optical waveguides, for operating the optical phased array in either an emitting mode or a receiving mode.

11. A control system according to claim 10, wherein modulating respective phases includes a step of setting a phase difference for destructive first order diffraction interference.

12. A control system according to claim 9, wherein the processing unit is arranged for reading phase and amplitude of respective optical modes propagating in the respective single mode optical waveguides, for operating the optical phased array in a receiving mode.

13. A method for controlling an integrated photonic circuit according to any of the preceding claims 1-12, the method comprising a step of operating the optical coherent array.

14. A computer program product for controlling an integrated photonic circuit according to any of the preceding claims 1-12, the computer program product comprising computer readable code for causing a processing unit to perform a step of operating the optical coherent array.
